(19) Europäisches Patentamt / European Patent Office / Office européen des brevets

(11) **EP 2 799 467 B1**

(12) **EUROPEAN PATENT SPECIFICATION**

(45) Date of publication and mention
of the grant of the patent:
**16.05.2018 Bulletin 2018/20**

(21) Application number: **12862521.7**

(22) Date of filing: **21.12.2012**

(51) Int Cl.:
*C08J 3/20* (2006.01)    *B60C 1/00* (2006.01)
*C08K 3/00* (2018.01)    *C08K 5/54* (2006.01)
*C08L 7/00* (2006.01)    *C08L 9/00* (2006.01)

(86) International application number:
**PCT/JP2012/083353**

(87) International publication number:
**WO 2013/099825 (04.07.2013 Gazette 2013/27)**

(54) **RUBBER COMPOSITION MANUFACTURING METHOD, RUBBER COMPOSITION, AND PNEUMATIC TIRE USING SAME**

HERSTELLUNGSVERFAHREN FÜR EINE KAUTSCHUKZUSAMMENSETZUNG , KAUTSCHUKZUSAMMENSETZUNG UND LUFTREIFEN DAMIT

PROCÉDÉ DE FABRICATION D'UNE COMPOSITION DE CAOUTCHOUC, COMPOSITION DE CAOUTCHOUC ET PNEUMATIQUE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2011 JP 2011284438**

(43) Date of publication of application:
**05.11.2014 Bulletin 2014/45**

(73) Proprietor: **Bridgestone Corporation**
**Tokyo 104-8340 (JP)**

(72) Inventor: **MATSUO, Shigeaki**
**Tokyo 187-8531 (JP)**

(74) Representative: **Oxley, Robin John George**
**Marks & Clerk LLP**
**90 Long Acre**
**London WC2E 9RA (GB)**

(56) References cited:
EP-A1- 0 818 478        WO-A1-2008/123306
JP-A- H0 873 607        JP-A- H11 286 577
JP-A- S57 100 042       JP-A- S57 195 636
JP-A- 2003 521 575      JP-A- 2010 514 764
US-A- 6 077 899         US-A1- 2009 084 476

• DATABASE CA [Online] CHEMICAL ABSTRACTS SERVICE, COLUMBUS, OHIO, US; 13 December 2002 (2002-12-13), YAMADA, HARUO ET AL: "Manufacture of silica-compounded rubber compositions with good processability", XP002738472, retrieved from STN Database accession no. 2002:944779 -& JP 2002 356583 A (ASAHI KASEI CORPORATION, JAPAN) 13 December 2002 (2002-12-13)

• DATABASE WPI Week 201116 Thomson Scientific, London, GB; AN 2011-B88223 XP002738526, -& JP 2011 038011 A (SUMITOMO RUBBER IND LTD) 24 February 2011 (2011-02-24)

EP 2 799 467 B1

**Description**

Technical Field

The present invention relates to a method for producing a rubber composition containing an inorganic filler and having an improved low-heat-generation property.

Background Art

Recently, in association with the movement of global regulation of carbon dioxide emission associated with the increase in attraction to environmental concerns, the demand for low fuel consumption by automobiles is increasing. To satisfy the requirement, it is desired to reduce rolling resistance relating to tire performance. Heretofore, as a means for reducing the rolling resistance of tires, a method of optimizing tire structures has been investigated; however, at present, a technique of using a lower-heat-generating rubber composition for tires has become employed as the most common method.

For obtaining such a low-heat-generating rubber composition, there is known a method of using an inorganic filler such as silica or the like.

However, in incorporating an inorganic filler such as silica or the like in a rubber composition to prepare an inorganic filler-containing rubber composition, the inorganic filler, especially silica aggregates in the rubber composition (owing to the hydroxyl group in the surface of silica), and therefore, for preventing the aggregation, a silane coupling agent is used.

Accordingly, for successfully solving the above-mentioned problem by incorporation of a silane coupling agent, various trials have been made for increasing the activity of the coupling function of the silane coupling agent.

For example, PTL 1 proposes a rubber composition containing, as basic components, at least (i) one diene elastomer, (ii) a white filler as a reinforcing filler and (iii) an alkoxysilane polysulfide as a coupling agent (white filler/diene elastomer) along with (iv) an enamine and (v) a guanidine derivative.

PTL 2 discloses a rubber composition containing, as basic components, at least (i) one diene elastomer, (ii) a white filler as a reinforcing filler and (iii) an alkoxysilane polysulfide as a coupling agent (white filler/diene elastomer) along with (iv) zinc dithiophosphate and (v) a guanidine derivative.

PTL 3 describes a rubber composition containing, as basic components, at least (i) a diene elastomer, (ii) an inorganic filler as a reinforcing filler and (iii) an alkoxysilane polysulfide (PSAS) as an (inorganic filler/diene elastomer) coupling agent, as combined with (iv) an aldimine (R-CH=N-R) and (v) a guanidine derivative.

Further, PTL 4 proposes a rubber composition basically containing at least (i) a diene elastomer, (ii) an inorganic filler as a reinforcing filler and (iii) an alkoxysilane polysulfide as a coupling agent, as combined with (iv) 1,2-dihydropyridine and (v) a guanidine derivative.

However, in these inventions, nothing is taken into consideration relating to kneading conditions.

Furthermore, although PTLs 5 and 6 may be cited as an example of improving the coupling function activity of the silane coupling agent with kneading conditions in consideration, further improving the coupling function activity of the silane coupling agent to thereby enhance the low-heat generation property is desired.

Citation List

Patent Literature

PTL 1:    JP-T 2002-521515
PTL 2:    JP-T 2002-521516
PTL 3:    JP-T 2003-530443
PTL 4:    JP-T 2003-523472
PTL 5:    WO2008/123306
PTL 6:    JP-A 2007-154130

Summary of Invention

Technical Problem

Under such circumstances, the object of the present invention is to provide a method for producing a rubber composition, which enables obtaining a rubber composition capable of suitably improving the low-heat-generation property thereof by further improving the coupling function activity of the silane coupling agent.

Solution to Problem

In order to accomplish the above object, the present inventors examined various methods of adding each component (A) to (D) in a kneading process for producing a rubber composition provided by compounding a rubber component (A), a filler containing an inorganic filler (B), a silane coupling agent (C), and a vulcanization accelerator (D). As a result, it was found experimentally that improvement of the coupling function activity can be obtained by suitably adding each component (A) to (D) during from the first stage to the final stage of kneading. This finding led to completion of the present invention.

That is, the present invention provides:

[1] a method for producing a rubber composition provided by compounding a rubber component (A) comprising at least one selected from natural rubbers and synthetic diene rubbers, a filler containing an inorganic filler (B), a silane coupling agent (C), and at least one vulcanization accelerator (D) selected from guanidines, sulfenamides, thiazoles, thiurams, dithiocarbamates, thioureas, and xanthates, wherein the rubber composition is kneaded in a plurality of stages and wherein, in the first stage (X) of kneading, a portion (A') of the rubber component (A), all or a portion of the inorganic filler (B), all or a portion of the silane coupling agent (C), and all or a portion of the vulcanization accelerator (D) are added and kneaded, and, in or after the second stage of kneading, the residual portion (A") of the rubber component (A) is added and kneaded;

[2] the method for producing a rubber composition according to the above [1], wherein the plural stages of kneading comprise two stages of the first stage (X) and the last stage (Z), in the first stage (X), a portion (A') of the rubber component (A), all or a portion of the inorganic filler (B), all or a portion of the silane coupling agent (C), and all or a portion of the vulcanization accelerator (D) are added and kneaded, and in the last stage (Z), the residual portion (A") of the rubber component (A) and a vulcanizing agent are added and kneaded;

[3] a method for producing a rubber composition provided by compounding a rubber component (A) comprising at least one selected from natural rubbers and synthetic diene rubbers, a filler containing an inorganic filler (B), a silane coupling agent (C), and at least one vulcanization accelerator(D)selected from guanidines, sulfenamides, thiazoles, thiurams, dithiocarbamates, thioureas, and xanthates, wherein the rubber composition is kneaded in three or more stages including the first stage (X) and the last stage (Z) and wherein, in the first stage (X), a portion (A') of the rubber component (A), all or a portion of the inorganic filler (B), and all or a portion of the silane coupling agent (C) are kneaded, in a stage (Y) in or after the second stage but before the last stage (Z) of kneading, all or a portion of the vulcanization accelerator (D) is added and kneaded, in or after the second stage of kneading, the residual portion (A") of the rubber component (A) is added and kneaded, and in the last stage (Z), a vulcanizing agent is added and kneaded;

[4] the method for producing a rubber composition according to any of the above [1] to [3], wherein the portion (A') of the rubber component (A) is at least one selected from solution-polymerized diene rubbers, and the residual portion (A") of the rubber component (A) is at least one selected from natural rubbers and emulsion-polymerized diene rubbers;

[5] a rubber composition produced by the method for producing a rubber composition according to any of the above [1] to [4] ; and

[6] a pneumatic tire using the rubber composition according to the above [5], as at least one member of tread parts, base tread parts, sidewall parts, inner liners and side-reinforcing rubber parts.

Advantageous Effects of Invention

According to the present invention, there can be provided methods for producing a rubber composition, which enable production of a rubber composition excellent in low-heat-generation property by further improving the coupling function activity of the silane coupling agent.

Description of Embodiments

Hereinafter, the present invention will be explained in detail.

The first invention is a method for producing a rubber composition provided by compounding a rubber component (A) comprising at least one selected from natural rubbers and synthetic diene rubbers, a filler containing an inorganic filler (B), a silane coupling agent (C), and at least one vulcanization accelerator (D) selected from guanidines, sulfenamides, thiazoles, thiurams, dithiocarbamates, thioureas, and xanthates, wherein the rubber composition is kneaded in a plurality of stages and wherein, in the first stage (X) of kneading, a portion (A') of the rubber component (A), all or a portion of the inorganic filler (B), all or a portion of the silane coupling agent (C), and all or a portion of the vulcanization accelerator (D) are added and kneaded, and in or after the second stage of kneading, the residual portion (A") of the rubber component (A) is added and kneaded.

In the first stage (X) of kneading in the present invention, a portion (A') of the rubber component (A), all or a portion of the inorganic filler (B), all or a portion of the silane coupling agent (C), and all or a portion of the vulcanization accelerator (D) are added and kneaded, and this is for the purpose of enhancing the dispersibility of a portion (A') of the rubber component (A) and the inorganic filler (B), and in addition, by adding and kneading the residual portion (A") of the rubber component (A) in or after the second stage of kneading, it becomes possible to control the dispersion condition of each rubber component in the rubber component (A) and the inorganic filler (B) thereby to further enhance the low-heat-generation property.

In addition, in the first stage of kneading, all or a portion of the vulcanization accelerator (D) is added and kneaded, and this is for the purpose of enhancing the coupling function activity of the silane coupling agent (C).

In that manner, the first invention of the method for producing a rubber composition comprising a rubber component (A) comprising at least one selected from natural rubbers and synthetic diene rubbers, a filler containing an inorganic filler (B), a silane coupling agent (C), and at least one vulcanization accelerator (D) selected from guanidines, sulfenamides, thiazoles, thiurams, dithiocarbamates, thioureas, and xanthates makes it possible to impart an excellent low-heat-generation property to the rubber composition.

Preferably in the first invention, the plural stages of kneading comprise two stages of the first stage (X) and the last stage (Z), in the first stage (X), a portion (A') of the rubber component (A), all or a portion of the inorganic filler (B), all or a portion of the silane coupling agent (C), and all or a portion of the vulcanization accelerator (D) are added and kneaded, and in the last stage (Z), the residual portion (A") of the rubber component (A) is added and kneaded. This is because the dispersion condition of each rubber component in the rubber component (A) and the inorganic filler (B) can be more suitably controlled.

In the first stage of kneading in the first invention, preferably, the number of molecules X of an organic acid compound (E) in the rubber composition is in the relationship represented by the following formula [A] relative to the number of molecules Y of the vulcanization accelerator (D) therein.

$$0 \leq X \leq 1.5 \times Y \qquad \ldots \ldots [A]$$

Making the relationship between the number of molecules (number of moles) X of the organic acid compound (E) and the number of molecules (number of moles) Y of the vulcanization accelerator (D) represented by the above-mentioned formula [A] can favorably prevent the effect of enhancing the coupling function activity of the silane coupling agent (C) by incorporation of the vulcanization accelerator (D) from being reduced.

The second invention of the method for producing a rubber composition of the present invention is a method for producing a rubber composition provided by compounding a rubber component (A) comprising at least one selected from natural rubbers and synthetic diene rubbers, a filler containing an inorganic filler (B), a silane coupling agent (C), and at least one vulcanization accelerator (D) selected from guanidines, sulfenamides, thiazoles, thiurams, dithiocarbamates, thioureas, and xanthates, wherein the rubber composition is kneaded in three or more stages including the first stage (X) and the last stage (Z) and wherein, in the first stage (X), a portion (A') of the rubber component (A), all or a portion of the inorganic filler (B), and all or a portion of the silane coupling agent (C) are added and kneaded, in a stage (Y) in or after the second stage but before the last stage (Z) of kneading, all or a portion of the vulcanization accelerator (D) is added and kneaded, in or after the second stage of kneading, the residual portion (A") of the rubber component (A) is added and kneaded, and in the last stage (Z), a vulcanizing agent is added and kneaded.

In the present invention, the rubber composition is kneaded in three or more kneading stages, and this is for securing the reaction between the silane coupling agent and silica and the reaction between the silane coupling agent and the polymer. Further, the above is effective for preventing the molecular weight of the rubber component (A) from being lowered owing to long-term high-temperature kneading thereof. That is, if the time of one kneading stage is made longer in order to decrease the number of stages of kneading, the rubber component (A) becomes exposed to high temperature for a long time and results in a possible decrease in the molecular weight thereof. It is important to avoid this.

The rubber component (A), all or a portion of the inorganic filler (B), and all or a portion of the silane coupling agent (C) are kneaded in the first stage (X) of kneading, and this is for making the reaction of the inorganic filler (B) and the silane coupling agent (C) proceed sufficiently.

In the stage (Y) in or after the second stage but before the last stage (Z) of kneading in the second invention, all or a portion of the vulcanization accelerator (D) is added and kneaded. This is for the purpose of further enhancing the coupling function activity of the silane coupling agent (C) by the vulcanization accelerator (D) after sufficient development of the reaction between the inorganic filler (B) and the silane coupling agent (C) to thereby make the reaction between the silane coupling agent (C) and the rubber component (A) proceed more favorably, whereby the low-heat-generation property can be improved further more.

The number of the kneading stages in the second invention may be 3 or more, and the upper limit thereof is not specifically defined, but is, in consideration of the productivity, preferably 8 stages or less, more preferably 6 stages or less, even more preferably 4 stages or less.

In that manner, the second invention of the method for producing a rubber composition comprising a rubber component (A) comprising at least one selected from natural rubbers and synthetic diene rubbers, a filler containing an inorganic filler (B), a silane coupling agent (C), and at least one vulcanization accelerator (D) selected from guanidines, sulfenamides, thiazoles, thiurams, dithiocarbamates, thioureas, and xanthates makes it possible to impart an excellent low-heat-generation property to the rubber composition.

In or after the second stage of kneading in the present invention, preferably, the residual portion (B") of the inorganic filler (B), or the residual portion (B") of the inorganic filler (B) and the residual portion (C") of the silane coupling agent (C) are added and kneaded. It becomes possible to favorably disperse the inorganic filler (B) even in the residual portion (A") of the rubber component (A) and to further suitably control the dispersion condition of each rubber component in the rubber component (A) and the inorganic filler (B) to thereby further enhance the low-heat-generation property.

In the present invention, preferred is adding the organic acid compound (E) in or after the second stage of kneading for more favorably exhibiting the effect of enhancing the coupling function activity of the silane coupling agent (C) by adding the vulcanization accelerator (D) in the first stage of kneading.

In the present invention, the maximum temperature of the rubber composition in the first stage (X) of kneading is preferably from 120 to 190°C, more preferably from 130 to 190°C, even more preferably from 140 to 180°C. Falling within the range of from 120 to 190°C, the coupling function activity of the silane coupling agent (C) can be favorably enhanced and the reaction between the silane coupling agent (C) and the rubber component (A) can be thereby made to further favorably proceed.

Similarly, the maximum temperature of the rubber composition in the kneading stage (Y) is preferably from 120 to 190°C, more preferably from 125 to 175°C.

The first stage of kneading in the present invention is the first stage of kneading the rubber component (A), the inorganic filler (B) and the silane coupling agent (C), but does not include a case of kneading the rubber component (A) and another filler than the inorganic filler (B) in the initial stage and a case of pre-kneading the rubber component (A) alone.

The maximum temperature of the rubber composition in the kneading stage before the last stage such as the first stage, the second stage and others is preferably from 120 to 190°C, more preferably from 130 to 175°C, even more preferably from 150 to 170°C. The kneading time is preferably from 0.5 minutes to 20 minutes, more preferably from 0.5 minutes to 10 minutes, even more preferably from 0.5 minutes to 5 minutes.

The last stage of kneading is a step of incorporating the chemicals participating in crosslinking (vulcanizing agent, vulcanization accelerator) and kneading them. The maximum temperature of the rubber composition in the last kneading stage is preferably from 60 to 140°C, more preferably from 80 to 120°C, even more preferably from 100 to 120°C. The kneading time is preferably from 0.5 minutes to 20 minutes, more preferably from 0.5 minutes to 10 minutes, even more preferably from 0.5 minutes to 5 minutes.

[Rubber Component (A)]

As the synthetic diene rubber of the rubber component (A) for use in the present invention, usable here are styrene-butadiene copolymer rubber (SBR), polybutadiene rubber (BR), polyisoprene rubber (IR), butyl rubber (IIR), ethylene-propylene-diene tercopolymer rubber (EPDM), acrylonitrile-butadiene copolymer rubber, chloroprene rubber, etc. One or more different types of natural rubbers and synthetic diene rubbers may be used here either singly or as combined.

Preferably, a portion (A') of the rubber component (A) in the present invention is at least one selected from solution-polymerized diene rubbers, and the residual portion (A") of the rubber component (A) is at least one selected from natural rubbers and emulsion-polymerized diene rubbers. This is because the emulsion-polymerized diene rubber generally contains the organic acid compound (E) derived from an emulsifying agent, for example, a fatty acid or a resin acid, and therefore, adding a solution-polymerized diene rubber not containing a fatty acid or a resin acid as a portion (A') of the rubber component (A) in the first stage of kneading betters the dispersibility of the inorganic filler (B) such as silica or the like, thereby more effectively enhancing the effect of improving the coupling function activity of the silane coupling agent (C) by incorporation of the vulcanization accelerator (D) and further enhancing the low-heat-generation property.

Here, the solution-polymerized diene rubber means a diene (co)polymer rubber obtained through solution polymerization of a conjugated diene compound, and includes, for example, a solution-polymerized styrene-butadiene copolymer rubber (hereinafter this may be referred to as "solution-polymerized SBR), a solution-polymerized polybutadiene rubber, a solution-polymerized styrene-butadiene-isoprene copolymer rubber, a solution-polymerized styrene-isoprene copolymer rubber, synthetic polyisoprene rubber, etc.

[Silane Coupling Agent (C)]

The silane coupling agent (C) used in the method for producing a rubber composition of the present invention is preferably one or more compounds selected from the group consisting of the compounds represented by the following general formulae (I) and (II).

Using the silane coupling agent (C) of the type, the rubber composition according to the method of the present invention is excellent in workability thereof in rubber processing and can give pneumatic tires having better abrasion resistance.

General formulae (I) and (II) are sequentially described below.

[Chem. 1]

$$(R^1O)_{3-p}(R^2)_p Si-R^3-S_a-R^3-Si(OR^1)_{3-r}(R^2)_r \ldots \qquad (I)$$

In the formula, plural $R^{1'}$ s may be the same or different and are each a hydrogen atom, a linear, cyclic, or branched alkyl group, having 1 to 8 carbon atoms, or a linear or branched alkoxyalkyl group having 2 to 8 carbon atoms; plural $R^{2'}$ s may be the same or different and are each a linear, cyclic, or branched alkyl group, having 1 to 8 carbon atoms; plural $R^{3'}$ s may be the same or different and are each a linear or branched alkylene group, having 1 to 8 carbon atoms. a is 2 to 6 as an average value; and p and r may be the same or different and are each 0 to 3 as an average value. However, p and r are not 3 at the same time.

Specific examples of the silane coupling agent (C) represented by the above-mentioned general formula (I) include bis(3-triethoxysilylpropyl) tetrasulfide, bis(3-trimethoxysilylpropyl) tetrasulfide, bis(3-methyldimethoxysilylpropyl) tetrasulfide, bis(2-triethoxysilylethyl) tetrasulfide, bis(3-triethoxysilylpropyl) disulfide, bis(3-trimethoxysilylpropyl) disulfide, bis(3-methyldimethoxysilylpropyl) disulfide, bis(2-triethoxysilylethyl) disulfide, bis(3-triethoxysilylpropyl) trisulfide, bis(3-trimethoxysilylpropyl) trisulfide, bis(3-methyldimethoxysilylpropyl) trisulfide, bis(2-triethoxysilylethyl) trisulfide, bis(3-monoethoxydimethylsilylpropyl) tetrasulfide, bis(3-monoethoxydimethylsilylpropyl) trisulfide, bis(3-monoethoxydimethylsilylpropyl) disulfide, bis(3-monomethoxydimethylsilylpropyl) tetrasulfide, bis(3-monomethoxydimethylsilylpropyl) trisulfide, bis(3-monomethoxydimethylsilylpropyl) disulfide, bis(2-monoethoxydimethylsilylethyl) tetrasulfide, bis(2-monoethoxydimethylsilylethyl) trisulfide, and bis(2-monoethoxydimethylsilylethyl) disulfide.

[Chem. 2]

$$(R^4O)_{3-s}(R^5)_s Si-R^6-S_k-R^7-S_k-R^6-Si(OR^4)_{3-t}(R^5)_t \ldots \qquad (II)$$

In the formula, plural $R^{4'}$ s may be the same or different and are each a hydrogen atom, a linear, cyclic, or branched alkyl group, having 1 to 8 carbon atoms, or a linear or branched alkoxyalkyl group having 2 to 8 carbon atoms; plural $R^{5'}$ s may be the same or different and are each a linear, cyclic, or branched alkyl group, having 1 to 8 carbon atoms; plural $R^{6'}$ s may be the same or different and are each a linear or branched alkylene group, having 1 to 8 carbon atoms. $R^7$ is a divalent group of any of general formulae,
($-S-R^8-S-$), ($-R^9-S_{m1}-R^{10}-$) , and ($-R^{11}-S_{m2}-R^{12}-S_{m3}-R^{13}-$) ($R^8$ to $R^{13}$ are each a divalent hydrocarbon group, a divalent aromatic group or a divalent organic group containing a heteroatom other than sulfur and oxygen, each having 1 to 20 carbon atoms; and m1, m2, and m3 are each 1 or more but less than 4 as an average value); plural k's may be the same or different and are each 1 to 6 as an average value; s and t are each 0 to 3 as an average value. However, s and t are not 3 at the same time.

Specific examples of the silane coupling agent (C) represented by the above-mentioned general formula (II) are compounds represented by
an average compositional formula $(CH_3CH_2O)_3Si-(CH_2)_3-S_2-(CH_2)_6-S_2-(CH_2)_3-Si(OCH_2CH_3)_3$,
an average compositional formula $(CH_3CH_2O)_3Si-(CH_2)_3-S_2-(CH_2)_{10}-S_2-(CH_2)_3-Si(OCH_2CH_3)_3$,
an average compositional formula $(CH_3CH_2O)_3Si-(CH_2)_3-S_3-(CH_2)_6-S_3-(CH_2)_3-Si(OCH_2CH_3)_3$,
an average compositional formula $(CH_3CH_2O)_3Si-(CH_2)_3-S_4-(CH_2)_6-S_4-(CH_2)_3-Si(OCH_2CH_3)_3$,
an average compositional formula $(CH_3CH_2O)_3Si-(CH_2)_3-S-(CH_2)_6-S_2-(CH_2)_6-S-(CH_2)_3-Si(OCH_2CH_3)_3$, an average

compositional formula $(CH_3CH_2O)_3Si-(CH_2)_3-S-(CH_2)_6-S_{2.5}-(CH_2)_6-S-(CH_2)_3-Si(OCH_2CH_3)_3$, an average compositional formula $(CH_3CH_2O)_3Si-(CH_2)_3-S-(CH_2)_6-S_3-(CH_2)_6-S-(CH_2)_3-Si(OCH_2CH_3)_3$, an average compositional formula $(CH_3CH_2O)_3Si-(CH_2)_3-S-(CH_2)_6-S_4-(CH_2)_6-S-(CH_2)_3-Si(OCH_2CH_3)_3$, an average compositional formula $(CH_3CH_2O)_3Si-(CH_2)_3-S-(CH_2)_{10}-S_2-(CH_2)_{10}-S-(CH_2)_3-Si(OCH_2CH_3)_3$, an average compositional formula $(CH_3CH_2O)_3Si-(CH_2)_3-S_4-(CH_2)_6-S_4-(CH_2)_6-S_4-(CH_2)_3-Si(OCH_2CH_3)_3$, an average compositional formula $(CH_3CH_2O)_3Si-(CH_2)_3-S_2-(CH_2)_6-S_2-(CH_2)_6-S_2-(CH_2)_3-Si(OCH_2CH_3)_3$, an average compositional formula $(CH_3CH_2O)_3Si-(CH_2)_3-S-(CH_2)_6-S_2-(CH_2)_6-S_2-(CH_2)_6-S-(CH_2)_3-Si(OC H_2CH_3)_3$, etc.

The silane coupling agent (C) represented by the above-mentioned general formula (II) may be obtained, for example, according to the production method described in JP-A 2006-167919.

The silane coupling agent (C) involved in the present invention is especially preferably a compound represented by the general formula (I) among the compounds represented by the above general formulae (I) and (II). This is so because the vulcanization accelerator (D) easily activates the polysulfide bond portion which reacts with the rubber component (A) .

In the present invention, the silane coupling agent (C) may be used singly or in a combination of two or more.

The amount of the silane coupling agent (C) blended in the rubber composition of the present invention is preferably such that the ratio by mass {silane coupling agent (E) /inorganic filler (B)} is from (1/100) to (20/100). This is because when the ratio is (1/100) or more, then the effect of improving the low heat-generating property of the rubber composition can be exhibited more effectively, and when (20/100) or less, then the cost of the rubber composition is reduced and the economic efficiency betters. Furthermore, the ratio by mass is more preferably from (3/100) to (20/100), particularly preferably from (4/100) to (10/100).

[Vulcanization Accelerator (D)]

The guanidines, sulfenamides, thiazoles, thiurams, dithiocarbamates, thioureas, and xanthates are cited as the vulcanization accelerator (D) used in the method for producing a rubber composition of the present invention.

The guanidines in the present invention include 1,3-diphenylguanidine, 1,3-di-o-tolylguanidine, 1-o-tolylbiguanide, di-o-tolylguanidine salt of dicatechol borate, 1,3-di-o-cumenylguanidine, 1,3-di-o-biphenylguanidine, 1,3-di-o-cumenyl-2-propionylguanidine, and the like. Among these, 1,3-diphenylguanidine, 1,3-di-o-tolylguanidine, and 1-o-tolylbiguanide are preferable because these are highly reactive, and 1,3-diphenylguanidine is particularly preferable because this is more highly reactive.

The sulfenamides in the present invention include N-cyclohexyl-2-benzothiazolylsulfenamide, N,N-dicyclohexyl-2-benzothiazolylsulfenamide, N-tert-butyl-2-benzothiazolylsulfenamide, N-oxydiethylene-2-benzothiazolylsulfenamide, N-methyl-2-benzothiazolylsulfenamide, N-ethyl-2-benzothiazolylsulfenamide, N-propyl-2-benzothiazolylsulfenamide, N-butyl-2-benzothiazolylsulfenamide, N-pentyl-2-benzothiazolylsulfenamide, N-hexyl-2-benzothiazolylsulfenamide, N-pentyl-2-benzothiazolylsulfenamide, N-octyl-2-benzothiazolylsulfenamide, N-2-ethylhexyl-2-benzothiazolylsulfenamide, N-decyl-2-benzothiazolylsulfenamide, N-dodecyl-2-benzothiazolylsulfenamide, N-stearyl-2-benzothiazolylsulfenamide, N,N-dimethyl-2-benzothiazolylsulfenamide, N,N-diethyl-2-benzothiazolylsulfenamide, N,N-dipropyl-2-benzothiazolylsulfenamide, N,N-dibutyl-2-benzothiazolylsulfenamide, N,N-dipentyl-2-benzothiazolylsulfenamide, N,N-dihexyl-2-benzothiazolylsulfenamide, N,N-dipentyl-2-benzothiazolylsulfenamide, N,N-dioctyl-2-benzothiazolylsulfenamide, N,N-di-2-ethylhexylbenzothiazolylsulfenamide, N-decyl-2-benzothiazolylsulfenamide, N,N-didodecyl-2-benzothiazolylsulfenamide, N,N-distearyl-2-benzothiazolylsulfenamide, and the like. Among these, N-cyclohexyl-2-benzothiazolylsulfenamide and N-tert-butyl-2-benzothiazolylsulfenamide are preferable because they are highly reactive.

The thiazoles in the present invention include 2-mercaptobenzothiazole, di-2-benzothiazolyl disulfide, 2-mercaptobenzothiazole zinc salt, 2-mercaptobenzothiazole cyclohexylamine salt, 2-(N,N-diethylthiocarbamoylthio)benzothiazole, 2-(4'-morpholinodithio)benzothiazole, 4-methyl-2-mercaptobenzothiazole, di-(4-methyl-2-benzothiazolyl) disulfide, 5-chloro-2-mercaptobenzothiazole, 2-mercaptobenzothiazole sodium, 2-mercapto-6-nitrobenzothiazole, 2-mercaptonaphtho[1,2-d]thiazole, 2-mercapto-5-methoxybenzothiazole, 6-amino-2-mercaptobenzothiazole, and the like. Among these, 2-mercaptobenzothiazole and di-2-benzothiazolyl disulfide are preferred as having high reactivity.

The thiurams in the present invention include tetramethylthiuram disulfide, tetraethylthiuram disulfide, tetrapropylthiuram disulfide, tetraisopropylthiuram disulfide, tetrabutylthiuram disulfide, tetrapentylthiuram disulfide, tetrahexylthiuram disulfide, tetraheptylthiuram disulfide, tetraoctylthiuram disulfide, tetranonylthiuram disulfide, tetradecylthiuram disulfide, tetradodecylthiuram disulfide, tetrastearylthiuram disulfide, tetrabenzylthiuram disulfide, tetrakis(2-ethylhexyl)thiuram disulfide, tetramethylthiuram monosulfide, tetraethylthiuram monosulfide, tetrapropylthiuram monosulfide, tetraisopropylthiuram monosulfide, tetrabutylthiuram monosulfide, tetrapentylthiuram monosulfide, tetrahexylthiuram monosulfide, tetraheptylthiuram monosulfide, tetraoctylthiuram monoisulfide, tetranonyl thiuram monosulfide, tetradecylthiuram monosulfide, tetra dodecylthiuram monosulfide, tetrastearylthiuram monosulfide, tetrabenzylthiuram monosulfide, dipentamethylenethiuram tetrasulfide, and the like. Among these, tetrakis(2-ethylhexyl)thiuram disulfide and tetrabenzylthiuram disulfide are preferable because these are highly reactive.

The dithiocarbamates in the present invention include zinc dimethyldithiocarbamate, zinc diethyldithiocarbamate, zinc dipropyldithiocarbamate, zinc diisopropyldithiocarbamate, zinc dibutyldithiocarbamate, zinc dipentyldithiocarbamate, zinc dihexyldithiocarbamate, zinc diheptyldithiocarbamate, zinc dioctyldithiocarbamate, zinc di(2-ethylhexyl)dithiocarbamate, zinc didecyldithiocarbamate, zinc didodecyldithiocarbamate, zinc N-pentamethylenedithiocarbamate, zinc N-ethyl-N-phenyldithiocarbamate, zinc dibenzyldithiocarbamate, copper dimethyldithiocarbamate, copper diethyldithiocarbamate, copper dipropyldithiocarbamate, copper diisopropyldithiocarbamate, copper dibutyldithiocarbamate, copper dipentyldithiocarbamate, copper dihexyldithiocarbamate, copper diheptyldithiocarbamate, copper dioctyldithiocarbamate, copper di(2-ethylhexyl)dithiocarbamate, copper didecyldithiocarbamate, copper didodecyldithiocarbamate, copper N-pentamethylenedithiocarbamate, copper dibenzyldithiocarbamate, sodium dimethyldithiocarbamate, sodium diethyldithiocarbamate, sodium dipropyldithiocarbamate, sodium diisopropyldithiocarbamate, sodium dibutyldithiocarbamate, sodium dipentyldithiocarbamate, sodium dihexyldithiocarbamate, sodium diheptyldithiocarbamate, sodium dioctyldithiocarbamate, sodium di(2-ethylhexyl)dithiocarbamate, sodium didecyldithiocarbamate, sodium didodecyldithiocarbamate, sodium N-pentamethylenedithiocarbamate, sodium dibenzyldithiocarbamate, ferric dimethyldithiocarbamate, ferric diethyldithiocarbamate, ferric dipropyldithiocarbamate, ferric diisopropyldithiocarbamate, ferric dibutyldithiocarbamate, ferric dipentyldithiocarbamate, ferric dihexyldithiocarbamate, ferric diheptyldithiocarbamate, ferric dioctyldithiocarbamate, ferric di(2-ethylhexyl)dithiocarbamate, ferric didecyldithiocarbamate, ferric didodecyldithiocarbamate, ferric N-pentamethylenedithiocarbamate, ferric dibenzyldithiocarbamate, and the like. Among these, zinc dibenzyldithiocarbamate, zinc N-ethyl-N-phenyldithiocarbamate, zinc dimethyldithiocarbamate, and copper dimethyldithiocarbamate are preferable because these are highly reactive.

The thioureas in the present invention include N,N'-diphenylthiourea, trimethylthiourea, N,N'-diethylthiourea, N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, o-tolylthiourea, and the like. Among these, N,N'-diethylthiourea, trimethylthiourea, N,N'-diphenylthiourea, and N,N'-dimethylthiourea are preferable because these are highly reactive.

The xanthates in the present invention include zinc methyl xanthate, zinc ethyl xanthate, zinc propyl xanthate, zinc isopropyl xanthate, zinc butyl xanthate, zinc pentyl xanthate, zinc hexyl xanthate, zinc heptyl xanthate, zinc octyl xanthate, zinc 2-ethylhexyl xanthate, zinc decyl xanthate, zinc dodecyl xanthate, potassium methyl xanthate, potassium ethyl xanthate, potassium propyl xanthate, potassium isopropyl xanthate, potassium butyl xanthate, potassium pentyl xanthate, potassium hexyl xanthate, potassium heptyl xanthate, potassium octyl xanthate, potassium 2-ethylhexyl xanthate, potassium decyl xanthate, potassium dodecyl xanthate, sodium methyl xanthate, sodium ethyl xanthate, sodium propyl xanthate, sodium isopropyl xanthate, sodium butyl xanthate, sodium pentyl xanthate, sodium hexyl xanthate, sodium heptyl xanthate, sodium octyl xanthate, sodium 2-ethylhexyl xanthate, sodium decyl xanthate, sodium dodecyl xanthate, and the like. Among these, zinc isopropyl xanthate is preferable because it is highly reactive.

In the first stage of kneading in the present invention, preferably, the number of molecules (number of moles) of the vulcanization accelerator (D) is from 0.1 to 1.0 time the number of molecules (number of moles) of the silane coupling agent (C). When it is 0.1 times or more, then the silane coupling agent (C) can be activated sufficiently, and when 1.0 time or less, then it would not have any significant influence on the vulcanization speed. More preferably, the number of molecules (number of moles) of the vulcanization accelerator (D) is from 0.3 to 1.0 time the number of molecules (number of moles) of the silane coupling agent (C).

Additionally, the vulcanization accelerator (D) is used also as an accelerator in sulfur vulcanization and may be blended in an adequate amount in the last stage of kneading, if desired.

Further, one preferred method of adding the vulcanization accelerator (D) in the first stage of kneading comprises adding the vulcanization accelerator (D) after kneading the rubber component (A), all or a portion of the inorganic filler (B) and all or a portion of the silane coupling agent (C), followed by kneading them. This is because, according to the method, the reaction between the silane coupling agent (C) and the rubber component (A) can be made to proceed sufficiently after the reaction between the silane coupling agent (C) and silica has proceeded sufficiently.

[Inorganic Filler (B)]

As the inorganic filler (B) for use in the rubber composition production method of the present invention, usable are silica and an inorganic compound represented by the following general formula (III):

$$dM^1 \cdot xSiO_y \cdot zH_2O \qquad (III)$$

In the general formula (III), $M^1$ represents at least one selected from, a metal selected from aluminum, magnesium, titanium, calcium and zirconium, and oxides or hydroxides of those metals, their hydrates, or carbonates of the metals; d, x, y and z each indicate an integer of from 1 to 5, an integer of from 0 to 10, an integer of from 2 to 5, and an integer of from 0 to 10, respectively.

In the general formula (III), when x and z are both 0, then the inorganic compound is at least one metal selected from aluminum, magnesium, titanium, calcium and zirconium, or a metal oxide or metal hydroxide thereof.

In the present invention, silica is preferred as the inorganic filler (B) from the viewpoint of satisfying both low rolling property and abrasion resistance. As silica, any commercially-available one is usable here; and above all, preferred is precipitated silica, fumed silica or colloidal silica, and particularly preferred is precipitated silica. Preferably, the BET specific surface area (as measured according to ISO 5794/1) of silica for use herein is from 40 to 350 $m^2/g$. Silica of which the BET specific surface area falls within the range is advantageous in that it satisfies both rubber-reinforcing capability and dispersibility in rubber component. From this viewpoint, silica having a BET specific surface area in a range of 80 to 350 $m^2/g$ is more preferable, especially preferable being silica having a BET specific surface area in a range of 120 to 350 $m^2/g$. As such silica, there may be used commercial products such as trade name "Nipsil AQ" (BET specific surface area = 205 $m^2/g$) and trade name "Nipsil KQ" produced by Tosoh Silica Corporation, and "Ultrasil VN3" (BET specific surface area = 175 $m^2/g$) produced by Degussa AG, and the like.

As the inorganic compound represented by the general formula (III), usable here are alumina ($Al_2O_3$) such as $\gamma$-alumina, $\alpha$-alumina, etc.; alumina monohydrate ($Al_2O_3 \cdot H_2O$) such as boehmite, diaspore, etc.; aluminum hydroxide [$Al(OH)_3$] such as gibbsite, bayerite, etc.; aluminum carbonate [$Al_2(CO_3)_3$], magnesium hydroxide [$Mg(OH)_2$], magnesium oxide (MgO), magnesium carbonate ($MgCO_3$) , talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], aluminum magnesium oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$, etc.), magnesium silicate ($Mg_2SiO_4$, $MgSiO_3$, etc.), calcium silicate ($Ca_2SiO_4$, etc.), aluminum calcium silicate ($Al_2O_3 \cdot CaO \cdot 2SiO_2$, etc.), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$]; as well as crystalline aluminosilicate salts containing a charge-correcting hydrogen, alkali metal or alkaline earth metal such as various types of zeolite. Also, it is preferable when $M^3$ in the general formula (III) is at least one selected from an aluminum metal, an oxide or a hydroxide of aluminum or a hydrate thereof, or a carbonate of aluminum. Among these, aluminum hydroxide is especially preferable.

One or more different types of the inorganic compounds of the general formula (III) may be used here either singly or as combined. The mean particle size of the inorganic compound is preferably within a range of from 0.01 to 10 $\mu$m from the viewpoint of the balance of kneading workability, abrasion resistance and wet grip performance, and more preferably within a range of from 0.05 to 5 $\mu$m.

As the inorganic filler (B) in the present invention, silica alone may be used, or silica as combined with at least one inorganic compound of the general formula (III) may be used.

If desired, the filler in the rubber composition in the present invention may contain carbon black in addition to the above-mentioned inorganic filler (B). Containing carbon black, the filler enjoys the effect of lowering the electric resistance of the rubber composition to thereby prevent static electrification thereof. Carbon black for use herein is not specifically defined. For example, preferred is use of high, middle or low-structure SAF, ISAF, IISAF, N339, HAF, FEF, GPF, SRF-grade carbon black; and more preferred is use of SAF, ISAF, IISAF, N339, HAF, FEF-grade carbon black. Preferably, the nitrogen adsorption specific surface area ($N_2SA$, as measured according to JIS K 6217-2:2001) of such carbon black is from 30 to 250 $m^2/g$. One alone or two or more different types of such carbon black may be used here either singly or as combined. In the present invention, the inorganic filler (B) does not include carbon black.

The inorganic filler (B) in the rubber composition in the present invention is used preferably in an amount of from 20 to 120 parts by mass relative to 100 parts by mass of the rubber component (A). When the amount is at least 20 parts by mass, then it is favorable from the viewpoint of securing wet performance; and when at most 120 parts by mass, then it is favorable from the viewpoint of reducing rolling resistance. Further, the amount is more preferably from 30 to 100 parts by mass.

Also preferably, the filler in the rubber composition in the present invention is in an amount of from 20 to 150 parts by mass relative to 100 parts by mass of the rubber component (A). When the amount is at least 20 parts by mass, then it is favorable from the viewpoint of enhancing rubber composition reinforcing capability; and when at most 150 parts by mass, then it is favorable from the viewpoint of reducing rolling resistance.

Of the filler, the inorganic filler (B) accounts for, from the viewpoint of a balance between the wet performance and the rolling resistance, preferably 30 mass% or more, more preferably 40 mass% or more and particularly preferably 70 mass% or more.

[Organic Acid Compound (E)]

In the first stage of kneading in the production method of the present invention, preferably, the number of molecules X of the organic acid compound (E) in the rubber composition is in the relationship represented by the following formula [A] relative to the number of molecules Y of the vulcanization accelerator (D) therein.

$$0 \leq X \leq 1.5 \times Y \qquad \ldots \quad [A]$$

This is in order to further enhance the effect of improving the coupling function activity, obtained by blending of the vulcanization accelerator (D). This is in order to suitably suppress reduction of the effect of activity improvement, the reduction occurring when the number of molecules (number of moles) of the organic acid compound (E) is more than 1.5 times the number of molecules (number of moles) of the vulcanization accelerator (D). From this viewpoint, more preferably, the number of molecules (number of moles) of the organic acid compound (E) is not more than the number of molecules (number of moles) of the vulcanization accelerator (D) .

In the production method of the present invention, the number of molecules (number of moles) of the organic acid compound (E) added to the rubber composition in the stage (Y) of kneading is preferably not more than the number of molecules (number of moles) of the vulcanization accelerator (D) added in the stage (Y), for the same reason as that for the above-mentioned formula (A).

The organic acid compound (E) blended in the rubber composition of the present invention includes organic acids such as saturated fatty acids, unsaturated fatty acids, resin acids such as rosin acids or modified rosin acids, and the like including stearic acid, palmitic acid, myristic acid, lauric acid, arachidic acid, behenic acid, lignoceric acid, capric acid, pelargonic acid, caprylic acid, enanthic acid, caproic acid, oleic acid, vaccenic acid, linoleic acid, linolenic acid, nervonic acid, and the like; and metal salts or esters of the saturated fatty acids, the unsaturated fatty acids, and the resin acids.

In the present invention, 50 mol% or more of the organic acid compound (E) is preferably stearic acid because the compound has to sufficiently exhibit its function as a vulcanization accelerating aid.

Further, when an emulsion-polymerized styrene-butadiene copolymer is used as a portion or all of the rubber component (A), it is preferable, from the viewpoint of an emulsifier necessary to obtain the emulsion-polymerized styrene-butadiene copolymer, that 50 mol% or more of the organic acid compound (E) is accounted for by the rosin acids (including the modified rosin acids) and/or fatty acids which are contained in the emulsion-polymerized styrene-butadiene copolymer.

In the rubber composition production method of the present invention, various additives that are generally incorporated in a rubber composition, for example, a vulcanization activator such as zinc oxide or the like, an antioxidant and others may be optionally added and kneaded in the first stage or the final stage of kneading, or in the intermediate stage between the first stage and the final stage.

As the kneading apparatus for the production method of the present invention, usable is any of a Banbury mixer, a roll, an intensive mixer, a twin screw extruder, etc.

[Pneumatic Tire]

The pneumatic tire of the present invention uses the rubber composition obtained according to the production method of the present invention, as at least one member of tread parts, base tread parts, sidewall parts, inner liners and side-reinforcing rubber parts. Especially preferred are pneumatic tires using the above-mentioned rubber composition as tread parts (cap tread parts and/or base tread parts) of those members.

Examples

The present invention is described in more detail with reference to the following Examples.

The maximum temperature and the low-heat-generation property (tanδ index) of the rubber composition in each stage of kneading were evaluated according to the methods mentioned below.

Method for measurement of maximum temperature of rubber composition in each stage of kneading

A thermometer was inserted into the center part of the rubber composition just after discharged out from a Banbury mixer to measure the temperature. After three measurements, the arithmetic average of the found data was referred to as the maximum temperature.

Low-Heat-Generation Property (tanδ index)

Using a viscoelasticity measuring device (by Rheometric), tanδ of the rubber composition sample was measured at a temperature of 60°C, at a dynamic strain of 5% and at a frequency of 15 Hz. Taking the reciprocal of tanδ in each Comparative Example as 100, the data were expressed as index indication according to the following formula. The samples having a larger index value have a lower-heat-generation property and have a smaller hysteresis loss.

$$\text{Low heat generation index} = \{(\tan\delta \text{ of vulcanized rubber}$$
$$\text{composition of each Comparative Example}) / (\tan\delta \text{ of}$$
$$\text{corresponding vulcanized rubber composition tested})\} \times 100$$

Production Example 1

Production of Silane Coupling Agent Represented by Average Compositional Formula $(CH_3CH_2O)_3Si-(CH_2)_3-S-(CH_2)_6-S_{2.5}-(CH_2)_6-S-(CH_2)_3-Si(OCH_2CH_3)_3$ (typical example C1 of silane coupling agent (II))

119 g (0.5 mol) of 3-mercaptopropyltriethoxysilane was put into a 2-liter separable flask equipped with a nitrogen-introducing duct, a thermometer, a Dimroth condenser and a dropping funnel, and with stirring, 151.2 g (0.45 mol) of an ethanol solution of sodium ethoxide having an effective ingredient concentration of 20% was added thereto. Subsequently, this was heated up to 80°C and stirred for 3 hours. Afterwards, this was cooled and transferred into a dropping funnel.
Next, 69.75 g (0.45 mol) of 1,6-dichlorohexane was put into a separable flask similar to the above, heated up to 80°C, and the reaction product of 3-mercaptopropyltriethoxysilane and sodium ethoxide was slowly and dropwise added thereto. After the addition, this was stirred for 5 hours at 80°C. Subsequently, this was cooled, and salt was separated from the obtained solution through filtration, and ethanol and excessive 1,6-dichlorohexane were removed therefrom through reduced-pressure distillation. The solution obtained was distilled under reduced pressure to obtain 137.7 g of a colorless transparent liquid with a boiling point of 148 to 150°C/0.005 torr. As a result of IR analysis, 1H-NMR analysis and mass spectrometry analysis (MS analysis), the product was a compound represented by $(CH_3CH_2O)_3Si-(CH_2)_3S-(CH_2)_6-Cl$. Through gas chromatography analysis (GC analysis), the purity of the compound was 97.5%.
Next, 80 g of ethanol, 5.46 g (0.07 mol) of anhydrous sodium sulfide and 3.36 g (0.105 mol) of sulfur were put into the same 0.5-liter separable flask as above, and heated up to 80°C. With stirring the solution, 49.91 g (0.14 mol) of the above $(CH_3CH_2O)_3Si-(CH_2)_3-S-(CH_2)_6-Cl$ was gradually and dropwise added thereto. After the addition, this was stirred for 10 hours at 80°C. After the stirring, this was cooled, the formed salt was taken out through filtration, and then the solvent ethanol was evaporated away under reduced pressure.
The obtained, red-brown transparent solution was analyzed through IR analysis, 1H-NMR analysis and supercritical fluid chromatography analysis, which confirmed that the product is a compound represented by an average compositional formula, $(CH_3CH_2O)_3Si-(CH_2)_3-S-(CH_2)_6-S_{2.5}-(CH_2)_6-S-(CH_2)_3-Si(OCH_2CH_3)_3$. In GPC analysis, the purity of the product was 85.2%.

Examples 1 to 11 and Comparative Examples 1 to 11

According to the compounding recipes and the kneading methods shown in Table 1, the rubber composition was kneaded in a Banbury mixer under the control that the maximum temperature thereof in the first stage of kneading could be 150°C in every case, and in the stage (Y) of the second stage of kneading, the components shown in Table 1 were added and kneaded, and in Examples 1, 2 and 4 to 11 and Comparative Examples 1, 2 and 4 to 11, the maximum temperature of the rubber composition was controlled to be 130°C. In Example 3 and Comparative Example 3, the stage (Y) of the second stage of kneading was omitted.
Next, in the last stage (Z) of kneading, the vulcanizing agent and others were added and kneaded under the control that the maximum temperature of the rubber composition in the last stage of kneading could be 110°C in every case, thereby preparing 22 types of rubber compositions of Examples 1 to 11 and Comparative Example 11. The obtained 22 types of rubber compositions were evaluated for the low-heat-generation property (tan$\delta$) thereof according to the method mentioned above. The results are shown in Table 1.

[Table 1] H

Table 1-1

| part by mass | | | Example | Comparative Example | Example | Comparative Example | Example | Comparative Example | Example | Comparative Example | Example | Comparative Example | Example | Comparative Example |
|---|---|---|---|---|---|---|---|---|---|---|---|---|---|---|
| | | | 1 | 1 | 2 | 2 | 3 | 3 | 4 | 4 | 5 | 5 | 6 | 6 |
| Compounding ingredients | First stage of kneading | Emulsion-polymerized SBR-A *1 | - | - | - | 68.75 | - | - | - | - | - | - | - | - |
| | | Solution-polymerized SBR-B *2 | 50 | 50 | 50 | 50 | 50 | 50 | 50 | 50 | 50 | 50 | 50 | 50 |
| | | Emulsion-polymerized SBR-C *3 | - | 50 | - | - | - | 50 | - | 50 | - | 50 | - | 50 |
| | | Carbon black N220 *4 | 10 | 10 | 10 | 10 | 10 | 10 | 10 | 10 | 10 | 10 | 10 | 10 |
| | | Silica *5 | 30 | 30 | 30 | 30 | 50 | 50 | 30 | 30 | 30 | 30 | 30 | 30 |
| | | Silane coupling agent Si75 *6 | 4.0 | 4.0 | 4.0 | 4.0 | 4.0 | 4.0 | 4.0 | 4.0 | - | - | 4.0 | 4.0 |
| | | Silane coupling agent C1 *7 | - | - | - | - | - | - | - | - | 5.9 | 5.9 | - | - |
| | | Aromatic oil | 30 | 30 | 30 | 30 | 30 | 30 | 30 | 30 | 30 | 30 | 30 | 30 |
| | | Stearic acid | 2.0 | 2.0 | 2.0 | 2.0 | 2.0 | 2.0 | 2.0 | 2.0 | 2.0 | 2.0 | 2.0 | 2.0 |
| | | Antiaging agent 6PPD *8 | - | 1.0 | - | 1.0 | - | 1.0 | - | 1.0 | - | 1.0 | - | 1.0 |
| | | 1,3-Diphenylguanidine *9 | 1.0 | - | 1.0 | - | 1.0 | - | - | - | 1.0 | - | - | - |
| | Second stage of kneading | Emulsion-polymerized SBR-A *1 | - | - | 68.75 | - | - | - | - | - | - | - | - | - |
| | | Emulsion-polymerized SBR-C *3 | 50 | - | - | - | - | - | 50 | - | 50 | - | 50 | - |
| | | Silica *5 | 20 | 20 | 20 | 20 | - | - | 20 | 20 | 20 | 20 | 20 | 20 |
| | | Silane coupling agent Si75 *6 | - | - | - | - | - | - | - | - | - | - | - | - |
| | | 1,3-Diphenylguanidine *9 | - | - | - | - | - | - | 1.0 | - | - | - | - | - |
| | | Vulcanization accelerator TBBS *10 | - | - | - | - | - | - | - | - | - | - | 1.0 | - |
| | | Mercaptobenzothiazole *11 | - | - | - | - | - | - | - | - | - | - | - | - |
| | | N,N'-diphenylthiourea *12 | - | - | - | - | - | - | - | - | - | - | - | - |
| | | Zinc dibenzyldithiocarbamate *13 | - | - | - | - | - | - | - | - | - | - | - | - |
| | | Tetrakis(2-ethylhexyl)thiuram disulfide *14 | - | - | - | - | - | - | - | - | - | - | - | - |
| | | Zinc isopropylxanthate *15 | - | - | - | - | - | - | - | - | - | - | - | - |
| | Last stage of kneading | Emulsion-polymerized SBR-C *3 | - | - | - | - | 50 | - | - | - | - | - | - | - |
| | | Stearic acid | 2.0 | 2.0 | 2.0 | 2.0 | 2.0 | 2.0 | 2.0 | 2.0 | 2.0 | 2.0 | 2.0 | 2.0 |
| | | Antiaging agent 6PPD *8 | 1.0 | - | 1.0 | - | 1.0 | - | 1.0 | - | 1.0 | - | 1.0 | - |
| | | Antiaging agent TMDQ *16 | 1.0 | 1.0 | 1.0 | 1.0 | 1.0 | 1.0 | 1.0 | 1.0 | 1.0 | 1.0 | 1.0 | 1.0 |
| | | Zinc oxide | 2.5 | 2.5 | 2.5 | 2.5 | 2.5 | 2.5 | 2.5 | 2.5 | 2.5 | 2.5 | 2.5 | 2.5 |
| | | 1,3-Diphenylguanidine *9 | 0.6 | 0.6 | 0.6 | 0.6 | 0.6 | 0.6 | 0.6 | 0.6 | 0.6 | 0.6 | 0.6 | 0.6 |
| | | Vulcanization accelerator MBTS *17 | 1.0 | 1.0 | 1.0 | 1.0 | 1.0 | 1.0 | 1.0 | 1.0 | 1.0 | 1.0 | 1.0 | 1.0 |
| | | Vulcanization accelerator TBBS *10 | 0.6 | 0.6 | 0.6 | 0.6 | 0.6 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 | 1.5 | 1.5 | 1.5 | 1.5 | 1.5 |
| Maximum temperature (°C) of rubber composition in first stage of kneading | | | 150 | 150 | 150 | 150 | 150 | 150 | 150 | 150 | 150 | 150 | 150 | 150 |
| Maximum temperature (°C) of rubber composition in second stage of kneading | | | 130 | 130 | 130 | 130 | - | - | 130 | 130 | 130 | 130 | 130 | 130 |
| Maximum temperature (°C) of rubber composition in last stage of kneading | | | 110 | 110 | 110 | 110 | 110 | 110 | 110 | 110 | 110 | 110 | 110 | 110 |
| Number of all stages of kneading | | | 3 | 3 | 3 | 3 | 2 | 2 | 3 | 3 | 3 | 3 | 3 | 3 |
| Property of vulcanized material: low-heat-generation property (tan δ index) | | | 122 | 100 | 126 | 100 | 118 | 100 | 131 | 100 | 123 | 100 | 119 | 100 |

Table 1-2

| | | part by mass | Example 7 | Comparative Example 7 | Example 8 | Comparative Example 8 | Example 9 | Comparative Example 9 | Example 10 | Comparative Example 10 | Example 11 | Comparative Example 11 |
|---|---|---|---|---|---|---|---|---|---|---|---|---|
| Compounding ingredients | First stage of kneading | Emulsion-polymerized SBR-A *1 | - | - | - | - | - | - | - | - | - | - |
| | | Solution-polymerized SBR-B *2 | 50 | 50 | 50 | 50 | 50 | 50 | 50 | 50 | 50 | 50 |
| | | Emulsion-polymerized SBR-C *3 | - | 50 | - | 50 | - | 50 | - | 50 | - | 50 |
| | | Carbon black N220 *4 | 11 | 10 | 12 | 10 | 13 | 10 | 14 | 10 | 15 | 10 |
| | | Silica *5 | 30 | 30 | 30 | 30 | 30 | 30 | 30 | 30 | 30 | 30 |
| | | Silane coupling agent Si75 *6 | 4.0 | 4.0 | 4.0 | 4.0 | 4.0 | 4.0 | 4.0 | 4.0 | 4.0 | 4.0 |
| | | Silane coupling agent C1 *7 | - | - | - | - | - | - | - | - | - | - |
| | | Aromatic oil | 30 | 30 | 30 | 30 | 30 | 30 | 30 | 30 | 30 | 30 |
| | | Stearic acid | 2.0 | 2.0 | 2.0 | 2.0 | 2.0 | 2.0 | 2.0 | 2.0 | 2.0 | 2.0 |
| | | Antiaging agent 6PPD *8 | - | 1.1 | - | 1.2 | - | 1.3 | - | 1.4 | - | 1.5 |
| | | 1,3-Diphenylguanidine *9 | - | - | - | - | - | - | - | - | - | - |
| | Second stage of kneading | Emulsion-polymerized SBR-A *1 | - | - | - | - | - | - | - | - | - | - |
| | | Emulsion-polymerized SBR-C *3 | 50 | - | 50 | - | 50 | - | 50 | - | 50 | - |
| | | Silica *5 | 20 | 20 | 20 | 20 | 20 | 20 | 20 | 20 | 20 | 20 |
| | | Silane coupling agent Si75 *6 | - | - | - | - | - | - | - | - | - | - |
| | | 1,3-Diphenylguanidine *9 | - | - | - | - | - | - | - | - | - | - |
| | | Vulcanization accelerator TBBS *10 | - | - | - | - | - | - | - | - | - | - |
| | | Mercaptobenzothiazole *11 | 1.0 | - | - | - | - | - | - | - | - | - |
| | | N,N'-diphenylthiourea *12 | - | - | 1.0 | - | - | - | - | - | - | - |
| | | Zinc dibenzyldithiocarbamate *13 | - | - | - | - | 1.0 | - | - | - | - | - |
| | | Tetrakis(2-ethylhexyl)thiuram disulfide *14 | - | - | - | - | - | - | 1.0 | - | - | - |
| | | Zinc isopropylxanthate *15 | - | - | - | - | - | - | - | - | 1.0 | - |
| | Last stage of kneading | Emulsion-polymerized SBR-C *3 | - | - | - | - | - | - | - | - | - | - |
| | | Stearic acid | 2.0 | 2.0 | 2.0 | 2.0 | 2.0 | 2.0 | 2.0 | 2.0 | 2.0 | 2.0 |
| | | Antiaging agent 6PPD *8 | 1.0 | - | 1.0 | - | 1.0 | - | 1.0 | - | 1.0 | - |
| | | Antiaging agent TMDQ *16 | 1.0 | 1.0 | 1.0 | 1.0 | 1.0 | 1.0 | 1.0 | 1.0 | 1.0 | 1.0 |
| | | Zinc oxide | 2.5 | 2.5 | 2.5 | 2.5 | 2.5 | 2.5 | 2.5 | 2.5 | 2.5 | 2.5 |
| | | 1,3-Diphenylguanidine *9 | 0.6 | 0.6 | 0.6 | 0.6 | 0.6 | 0.6 | 0.6 | 0.6 | 0.6 | 0.6 |
| | | Vulcanization accelerator MBTS *17 | 1.0 | 1.0 | 1.0 | 1.0 | 1.0 | 1.0 | 1.0 | 1.0 | 1.0 | 1.0 |
| | | Vulcanization accelerator TBBS *10 | 0.6 | 0.6 | 0.6 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 | 1.5 | 1.5 | 1.5 |
| Maximum temperature (°C) of rubber composition in first stage of kneading | | | 150 | 150 | 150 | 150 | 150 | 150 | 150 | 150 | 150 | 150 |
| Maximum temperature (°C) of rubber composition in second stage of kneading | | | 130 | 130 | 130 | 130 | 130 | 130 | 130 | 130 | 130 | 130 |
| Maximum temperature (°C) of rubber composition in last stage of kneading | | | 110 | 110 | 110 | 110 | 110 | 110 | 110 | 110 | 110 | 110 |
| Number of all stages of kneading | | | 3 | 3 | 3 | 3 | 3 | 3 | 3 | 3 | 3 | 3 |
| Property of vulcanized material: low-heat-generation property (tan$\delta$ index) | | | 110 | 100 | 122 | 100 | 125 | 100 | 120 | 100 | 115 | 100 |

[Notes]

*1: JSR's emulsion-polymerized styrene-butadiene copolymer rubber (SBR), trade name "#0122" (bound styrene content: 37 mass%)

*2: Asahi Kasei's solution-polymerized styrene-butadiene copolymer rubber (SBR), trade name "Tufdene 2000" (bound styrene content: 25 mass%)

*3: JSR's emulsion-polymerized styrene-butadiene copolymer rubber (SBR), trade name "#1500" (bound styrene content: 23.5 mass%)

*4: Trade name "#80" produced by Asahi Carbon Co., Ltd.

*5: Tosoh Silica's trade name "Nipsil AQ", BET specific surface area 205 m$^2$/g

*6: Bis(3-triethoxysilylpropyl) disulfide (mean sulfur chain length: 2.35), Evonik's silane coupling agent, trade name "Si75" (registered trademark)

*7: Typical example C1 of silane coupling agent (II) obtained in Production Example 1

*8: N-(1,3-dimethylbutyl)-N'-phenyl-p-phenylenediamine, by Ouchi Shinko Chemical, trade name "Nocrac 6C"

*9: 1,3-Diphenylguanidine, Sanshin Chemical's trade name "Sanceler D"

*10: N-tert-butyl-2-benzothiazolylsulfenamide, Sanshin

Chemical's trade name "Sanceler NS"

*11: Mercaptobenzothiazole; trade name "Nocceler M" produced by Ouchi Shinko Chemical Co., Ltd.

*12: N,N'-diphenylthiourea; trade name "Nocceler C" produced by Ouchi Shinko Chemical Industrial Co., Ltd.

*13: Zinc dibenzyldithiocarbamate; trade name "Nocceler ZTC" produced by Ouchi Shinko Chemical Industrial Co., Ltd.

*14: Tetrakis(2-ethylhexyl)thiuram disulfide; trade name "Nocceler TOT-N" produced by Ouchi Shinko Chemical Industrial Co., Ltd.

*15: Zinc isopropyl xanthate; trade name "Nocceler ZIX-O" produced by Ouchi Shinko Chemical Industrial Co., Ltd.

*16: 2,2,4-Trimethyl-1,2-dihydroquinoline polymer; trade name "Nocrac 224" produced by Ouchi Shinko Chemical Industrial Co., Ltd.

*17: Di-2-benzothiazolyl disulfide, Sanshin Chemical's trade name "Sanceler DM"

As obvious from Table 1, the rubber composition of Example 1 was better than the rubber composition of Comparative Example 1 and the rubber compositions of Examples 2 to 5 were better than the comparative rubber compositions of Comparative Examples 2 to 5, all in point of the low-heat-generation property (tan$\delta$ index).

Industrial Applicability

According to the production method for a rubber composition of the present invention, it is possible to obtain a rubber composition excellent in low-heat-generation property with successfully inhibiting the coupling function activity of the silane coupling agent used from lowering and with further increasing the coupling activity thereof, and the production method is therefore favorably used as a production method for members such as tread parts, base tread parts, sidewall parts, inner liners, side-reinforcing rubber parts and others of various types of pneumatic tires for passenger cars, small-size trucks, minivans, pickup trucks and big-size vehicles (trucks, buses, construction vehicles, etc.) and others, especially for tread members of pneumatic radial tires .

**Claims**

1.   A method for producing a rubber composition provided by compounding a rubber component (A) comprising at least one selected from natural rubbers and synthetic diene rubbers, a filler containing an inorganic filler (B), a silane coupling agent (C), and at least one vulcanization accelerator (D) selected from guanidines, sulfenamides, thiazoles, thiurams, dithiocarbamates, thioureas, and xanthates, wherein the rubber composition is kneaded in a plurality of stages and wherein, in the first stage (X) of kneading, a portion (A') of the rubber component (A), all or a portion of the inorganic filler (B), all or a portion of the silane coupling agent (C), and all or a portion of the vulcanization accelerator (D) are added and kneaded, and, in or after the second stage of kneading, the residual portion (A") of the rubber component (A) is added and kneaded.

2. The method for producing a rubber composition according to claim 1, wherein, in or after the second stage of kneading, the residual portion (B") of the inorganic filler (B), or the residual portion (B") of the inorganic filler (B) and the residual portion (C") of the silane coupling agent (C) are added and kneaded.

3. The method for producing a rubber composition according to claim 1 or 2, wherein an organic acid compound (E) is added in or after the second stage of kneading.

4. The method for producing a rubber composition according to any of claims 1 to 3, wherein the plural stages of kneading comprise two stages of the first stage (X) and the last stage (Z), in the first stage (X), a portion (A') of the rubber component (A), all or a portion of the inorganic filler (B), all or a portion of the silane coupling agent (C), and all or a portion of the vulcanization accelerator (D) are added and kneaded, and in the last stage (Z), the residual portion (A") of the rubber component (A) and a vulcanizing agent are added and kneaded.

5. The method for producing a rubber composition according to any of claims 1 to 4, wherein, in the first stage of kneading, the number of molecules X of the organic acid compound (E) in the rubber composition is in the relationship represented by the following formula [A] relative to the number of molecules Y of the vulcanization accelerator (D) therein:

$$0 \leq X \leq 1.5 \times Y \qquad \ldots \ldots \quad [A].$$

6. A method for producing a rubber composition provided by compounding a rubber component (A) comprising at least one selected from natural rubbers and synthetic diene rubbers, a filler containing an inorganic filler (B), a silane coupling agent (C), and at least one vulcanization accelerator (D) selected from guanidines, sulfenamides, thiazoles, thiurams, dithiocarbamates, thioureas, and xanthates, wherein the rubber composition is kneaded in three or more stages including the first stage (X) and the last stage (Z) and wherein, in the first stage (X), a portion (A') of the rubber component (A), all or a portion of the inorganic filler (B), and all or a portion of the silane coupling agent (C) are added and kneaded, in a stage (Y) in or after the second stage but before the last stage (Z) of kneading, all or a portion of the vulcanization accelerator (D) is added and kneaded, in or after the second stage of kneading, the residual portion (A") of the rubber component (A) is added and kneaded, and in the last stage (Z), a vulcanizing agent is added and kneaded.

7. The method for producing a rubber composition according to claim 6, wherein, in or after the second stage of kneading, the residual portion (B") of the inorganic filler (B), or the residual portion (B") of the inorganic filler (B) and the residual portion (C") of the silane coupling agent (C) are added and kneaded.

8. The method for producing a rubber composition according to claim 6 or 7, wherein an organic acid compound (E) is added in or after the second stage of kneading.

9. The method for producing a rubber composition according to any of claims 1 to 8, wherein the maximum temperature of the rubber composition in the first stage (X) is from 120 to 190°C.

10. The method for producing a rubber composition according to any of claims 1 to 9, wherein the portion (A') of the rubber component (A) is at least one selected from solution-polymerized diene rubbers, and the residual portion (A") of the rubber component (A) is at least one selected from natural rubbers and emulsion-polymerized diene rubbers.

11. The method for producing a rubber composition according to any of claims 1 to 10, wherein the silane coupling agent (C) is one or more compounds selected from the group consisting of the compounds represented by the following general formulae (I) and (II)

[Chem. 1]

$$(R^1O)_{3-p}(R^2)_p Si\text{-}R^3\text{-}S_a\text{-}R^3\text{-}Si(OR^1)_{3-r}(R^2)_r \text{ ...} \qquad (I)$$

[In the formula, plural $R^{1'}$ s may be the same or different and are each a hydrogen atom, a linear, cyclic, or branched alkyl group, having 1 to 8 carbon atoms, or a linear or branched alkoxyalkyl group having 2 to 8 carbon atoms; plural $R^{2'}$ s may be the same or different and are each a linear, cyclic, or branched alkyl group, having 1 to 8 carbon atoms; plural $R^{3'}$ s may be the same or different and are each a linear or branched alkylene group, having 1 to 8 carbon atoms. a is 2 to 6 as an average value; and p and r may be the same or different and are each 0 to 3 as an average value. However, p and r are not 3 at the same time]

[Chem. 2]

$$(R^4O)_{3-s}(R^5)_s Si\text{-}R^6\text{-}S_k\text{-}R^7\text{-}S_k\text{-}R^6\text{-}Si(OR^4)_{3-t}(R^5)_t \text{...} \qquad (II)$$

[In the formula, plural $R^{4'}$ s may be the same or different and are each a hydrogen atom, a linear, cyclic, or branched alkyl group, having 1 to 8 carbon atoms, or a linear or branched alkoxyalkyl group having 2 to 8 carbon atoms; plural $R^{5'}$ s may be the same or different and are each a linear, cyclic, or branched alkyl group, having 1 to 8 carbon atoms; plural $R^{6'}$ s may be the same or different and are each a linear or branched alkylene group, having 1 to 8 carbon atoms. $R^7$ is a divalent group of any of general formulae, $(-S-R^8-S-)$, $(-R^9-S_{m1}-R^{10}-)$, and $(-R^{11}-S_{m2}-R^{12}-S_{m3}-R^{13}-)$ ($R^8$ to $R^{13}$ are each a divalent hydrocarbon group, a divalent aromatic group or a divalent organic group containing a heteroatom other than sulfur and oxygen, each having 1 to 20 carbon atoms; and m1, m2, and m3 are each 1 or more but less than 4 as an average value) ; plural k' s may be the same or different and are each 1 to 6 as an average value; s and t are each 0 to 3 as an average value. However, s and t are not 3 at the same time.].

12. The method for producing a rubber composition according to any of claims 1 to 11, wherein the silane coupling agent (C) is a compound represented by the preceding general formula (I) .

13. The method for producing a rubber composition according to any of claims 1 to 12, wherein the inorganic filler (B) is silica.

14. The method for producing a rubber composition according to any of claims 1 to 13, wherein the inorganic filler (B) accounts for 30% by mass or more in the filler.

15. The method for producing a rubber composition according to any of claims 1 to 5 and 9 to 14, wherein the number of molecules of the vulcanization accelerator (D) in the rubber composition in the first stage of kneading is from 0.1 to 1.0 time the number of molecules of the silane coupling agent (C) therein.

16. The method for producing a rubber composition according to any of claims 1 to 15, wherein the guanidine is at least one compound selected from 1,3-diphenylguanidine,1,3-di-o-tolylguanidine and 1-o-tolylbiguanide.

17. The method for producing a rubber composition according to any of claims 1 to 16, wherein the xanthate is zinc isopropyl xanthate.

18. The method for producing a rubber composition according to any of claims 1 to 17, wherein stearic acid accounts for 50 mol% or more in the organic acid compound (E).

19. A rubber composition produced by the method for producing a rubber composition according to any of claims 1 to 18.

20. A pneumatic tire using the rubber composition according to claim 19, as at least one member of tread parts, base tread parts, sidewall parts, inner liners and side-reinforcing rubber parts.

**Patentansprüche**

1. Verfahren für die Herstellung einer Kautschukzusammensetzung, die durch Compoundieren einer Kautschukkomponente (A) bereitgestellt wird, die mindestens eines ausgewählt unter Naturkautschuken und synthetischen Dienkautschuken, einem Füllstoff, der einen anorganischen Füllstoff (B) enthält, einem Silankopplungsmittel (C) und mindestens einem Vulkanisationsbeschleuniger (D) umfasst ausgewählt unter Guanidinen, Sulfenamiden, Thiazolen, Thiuramen, Dithiocarbamaten, Thioharnstoffen und Xanthaten, wobei die Kautschukzusammensetzung in einer Mehrzahl von Stufen geknetet wird und wobei in der ersten Stufe (X) des Knetens ein Teil (A') der Kautschukkomponente (A), der gesamte oder ein Teil des anorganischen Füllstoffs (B), das gesamte oder ein Teil des Silankopplungsmittels (C) und der gesamte oder ein Teil des Vulkanisationsbeschleunigers (D) zugegeben und geknetet werden und während oder nach der zweiten Stufe des Knetens der restliche Teil (A") der Kautschukkomponente (A) zugegeben und geknetet wird.

2. Verfahren für die Herstellung einer Kautschukzusammensetzung nach Anspruch 1, wobei während oder nach der zweiten Stufe des Knetens der restliche Teil (B") des anorganischen Füllstoffs (B) oder der restliche Teil (B") des anorganischen Füllstoffs (B) und der restliche Teil (C") des Silankopplungsmittels (C) zugegeben und geknetet werden.

3. Verfahren für die Herstellung einer Kautschukzusammensetzung nach Anspruch 1 oder 2, wobei eine organische saure Verbindung (E) während oder nach der zweiten Stufe des Knetens zugegeben wird.

4. Verfahren für die Herstellung einer Kautschukzusammensetzung nach irgendeinem der Ansprüche 1 bis 3, wobei die mehreren Stufen des Knetens zwei Stufen der ersten Stufe (X) und der letzten Stufe (Z) umfassen, in der ersten Stufe (X ein Teil (A') der Kautschukkomponente (A), der gesamte oder ein Teil des anorganischen Füllstoffs (B), das gesamte oder ein Teil des Silankopplungsmittels (C) und der gesamte oder ein Teil des Vulkanisationsbeschleunigers (D) zugegeben und geknetet werden und in der letzten Stufe (Z) der restliche Teil (A") der Kautschukkomponente (A) und ein Vulkanisationsmittel zugegeben und geknetet werden.

5. Verfahren für die Herstellung einer Kautschukzusammensetzung nach irgendeinem der Ansprüche 1 bis 4, wobei in der ersten Stufe des Knetens die Anzahl von Molekülen X der organischen sauren Verbindung (E) in der Kautschukzusammensetzung in dem Verhältnis, das durch die folgende Formel [A] dargestellt ist, mit Bezug auf die Anzahl von Molekülen Y des Vulkanisationsbeschleunigers (D) darin vorliegt:

$$0 \leq X \leq, 1{,}5 \times Y \qquad [A].$$

6. Verfahren für die Herstellung einer Kautschukzusammensetzung, die durch Compoundieren einer Kautschukkomponente (A) bereitgestellt wird, die mindestens eines ausgewählt unter Naturkautschuken und synthetischen Dienkautschuken, einem Füllstoff, der einen anorganischen Füllstoff (B) enthält, einem Silankopplungsmittel (C) und mindestens einem Vulkanisationsbeschleuniger (D) umfasst ausgewählt unter Guanidinen, Sulfenamiden, Thiazolen, Thiuramen, Dithiocarbamaten, Thioharnstoffen und Xanthaten, wobei die Kautschukzusammensetzung in drei oder mehr Stufen einschließlich der ersten Stufe (X) und der letzten Stufe (Z) geknetet wird und wobei in der ersten Stufe (X) ein Teil (A') der Kautschukkomponente (A), der gesamte oder ein Teil des anorganischen Füllstoffs (B), das gesamte oder ein Teil des Silankopplungsmittels (C) zugegeben und geknetet werden, in einer Stufe Y während oder nach der zweiten Stufe, jedoch vor der letzten Stufe (Z) des Knetens der gesamte oder ein Teil des Vulkanisationsbeschleunigers (D) zugegeben und geknetet wird, während oder nach der zweiten Stufe des Knetens der restliche Teil (A") der Kautschukkomponente (A) zugegeben und geknetet wird und in der letzten Stufe (Z) ein Vulkanisationsmittel zugegeben und geknetet wird.

7. Verfahren für die Herstellung einer Kautschukzusammensetzung nach Anspruch 6, wobei während oder nach der zweiten Stufe des Knetens der restliche Teil (B") des anorganischen Füllstoffs (B) oder der restliche Teil (B") des anorganischen Füllstoffs (B) und der restliche Teil (C") des Silankopplungsmittels (C) zugegeben und geknetet werden.

8. Verfahren für die Herstellung einer Kautschukzusammensetzung nach Anspruch 6 oder 7, wobei eine organische saure Verbindung (E) während oder nach der zweiten Stufe des Knetens zugegeben wird.

9. Verfahren für die Herstellung einer Kautschukzusammensetzung nach irgendeinem der Ansprüche 1 bis 8, wobei die Höchsttemperatur der Kautschukzusammensetzung in der ersten Stufe (X) 120 bis 190 °C beträgt.

10. Verfahren für die Herstellung einer Kautschukzusammensetzung nach irgendeinem der Ansprüche 1 bis 9, wobei der Anteil (A') der Kautschukkomponente (A) mindestens eines ist ausgewählt von lösungspolymerisierten Dienkautschuken, und der restliche Anteil (A") der Kautschukkomponente (A) mindestens eines ist ausgewählt unter Naturkautschuken und emulsionspolymerisierten Dienkautschuken.

11. Verfahren für die Herstellung einer Kautschukzusammensetzung nach irgendeinem der Ansprüche 1 bis 10, wobei das Silankopplungsmittel (C) eine oder mehrere Verbindungen ist ausgewählt aus der Gruppe bestehend aus den Verbindungen, die durch die folgenden allgemeinen Formeln (I) und (II) dargestellt sind

[Chem. 1]

$$(R^1O)_{3-p}(R^2)_pSi-R^{3}-S_a-R^3-Si(OR^1)_{3-r}(R^2)_r \cdots \qquad (I)$$

[In der Formel können $R^1$ im Plural gleich oder verschieden sein und sind jeweils ein Wasserstoffatom, eine lineare, cyclische oder verzweigte Alkylgruppe, die jeweils 1 bis 8 Kohlenstoffatome aufweist, oder eine lineare oder verzweigte Alkoxyalkylgruppe, die 2 bis 8 Kohlenstoffatome aufweist; $R^2$ im Plural können gleich oder verschieden sein und sind jeweils eine lineare, cyclische oder verzweigte Alkylgruppe, die 1 bis 8 Kohlenstoffatome aufweist; $R^3$ im Plural können gleich oder verschieden sein und sind jeweils eine lineare, cyclische oder verzweigte Alkylengruppe, die 1 bis 8 Kohlenstoffatome aufweist. a beträgt 2 bis 6 als Durchschnittswert; und p und r können gleich oder verschieden sein und betragen jeweils 0 bis 3 als Durchschnittswert. Jedoch betragen p und r nicht gleichzeitig 3]

[Chem. 2]

$$(R^4O_{3-s}(R^5)_sSi-R^6-S_k-R^7-S_k-R^6-Si(OR^4)_{3-t}(R^5)_t \cdots \qquad (II)$$

[In der Formel können $R^4$ im Plural gleich oder verschieden sein und sind jeweils ein Wasserstoffatom, eine lineare, cyclische oder verzweigte Alkylgruppe, die jeweils 1 bis 8 Kohlenstoffatome aufweist, oder eine lineare oder verzweigte Alkoxyalkylgruppe, die 2 bis 8 Kohlenstoffatome aufweist; $R^5$ im Plural können gleich oder verschieden sein und sind jeweils eine lineare, cyclische oder verzweigte Alkylgruppe, die 1 bis 8 Kohlenstoffatome aufweist; $R^6$ im Plural können gleich oder verschieden sein und sind jeweils eine lineare, cyclische oder verzweigte Alkylengruppe, die 1 bis 8 Kohlenstoffatome aufweist. $R^7$ ist eine zweiwertige Gruppe irgendeiner der allgemeinen Formeln (-S-$R^8$-S-), (-$R^9$-$S_{m1}$-$R^{10}$-) und (-$R^{11}$-$S_{m2}$-$R^{12}$-$S_{m3}$-$R_{13}$-) (wobei $R^8$ bis $R^{13}$ jeweils eine zweiwertige Kohlenwasserstoffgruppe, eine zweiwertige aromatische Gruppe oder eine zweiwertige organische Gruppe sind, die ein Heteroatom enthält, bei dem es sich nicht um Schwefel und Sauerstoff handelt, wobei jedes 1 bis 20 Kohlenstoffatome aufweist; und m1, m2 und m3 jeweils 1 oder mehr aber weniger als 4 als Durchschnittswert betragen); k im Plural gleich oder verschieden sein können und jeweils 1 bis 6 als Durchschnittswert betragen; und s und t jeweils 0 bis 3 als Durchschnittswert betragen. Jedoch betragen s und t nicht gleichzeitig 3].

12. Verfahren für die Herstellung einer Kautschukzusammensetzung nach irgendeinem der Ansprüche 1 bis 11, wobei das Silankopplungsmittel (C) eine Verbindung ist, die durch die vorhergehende allgemeine Formel (I) dargestellt ist.

13. Verfahren für die Herstellung einer Kautschukzusammensetzung nach irgendeinem der Ansprüche 1 bis 12, wobei der anorganische Füllstoff (B) Siliciumdioxid ist.

14. Verfahren für die Herstellung einer Kautschukzusammensetzung nach irgendeinem der Ansprüche 1 bis 13, wobei der anorganische Füllstoff (B) 30 Masse-% oder mehr in dem Füllstoff ausmacht.

15. Verfahren für die Herstellung einer Kautschukzusammensetzung nach irgendeinem der Ansprüche 1 bis 5 und 9 bis 14, wobei die Anzahl von Molekülen des Vulkanisationsbeschleunigers (D) in der Kautschukzusammensetzung in der ersten Stufe des Knetens das 0,1 bis 1,0-Fache der Anzahl von Molekülen in dem Silankopplungsmittel (C) darin ist.

16. Verfahren für die Herstellung einer Kautschukzusammensetzung nach irgendeinem der Ansprüche 1 bis 15, wobei das Guanidin mindestens eine Verbindung ist ausgewählt unter 1,3-Diphenylguanidin,1,3-di-o-tolylguanidin und 1-o-Tolylbiguanidin.

17. Verfahren für die Herstellung einer Kautschukzusammensetzung nach irgendeinem der Ansprüche 1 bis 16, wobei das Xanthat Zinkisopropylxanthat ist.

18. Verfahren für die Herstellung einer Kautschukzusammensetzung nach irgendeinem der Ansprüche 1 bis 17, wobei Stearinsäure 50 Mol-% oder mehr in der organischen sauren Verbindung (E) ausmacht.

19. Kautschukzusammensetzung, die durch das Verfahren für die Herstellung einer Kautschukzusammensetzung nach irgendeinem der Ansprüche 1 bis 18 hergestellt wird.

20. Luftreifen, bei dem die Kautschukzusammensetzung nach Anspruch 19 als mindestens ein Element von mit einem Profil versehenen Teilen, Grundprofilteilen, Seitenwandteilen, Innenseelen und seitenverstärkenden Kautschukteilen verwendet wird.

**Revendications**

1. Procédé de production d'une composition de caoutchouc préparée par malaxage d'un constituant de caoutchouc (A) comprenant au moins l'un sélectionné parmi les caoutchoucs d'origine naturelle et les caoutchoucs à base de diène synthétique, une charge contenant une charge inorganique (B), un agent de couplage au silane (C), et au moins un accélérateur de vulcanisation (D) sélectionné parmi les guanidines, les sulfénamides, les thiazoles, les thiurames, les dithiocarbamates, les thiourées, et les xanthates, la composition de caoutchouc étant malaxée en une pluralité d'étapes et, dans la première étape (X) de malaxage, une partie (A') du constituant de caoutchouc (A), tout ou une partie de la charge inorganique (B), tout ou une partie de l'agent de couplage au silane (C), et tout ou une partie de l'accélérateur de vulcanisation (D) étant ajoutés et malaxés, et, dans ou après la seconde étape de malaxage, la partie résiduelle (A") du constituant de caoutchouc (A) étant ajoutée et malaxée.

2. Procédé de production d'une composition de caoutchouc selon la revendication 1, dans ou après la seconde étape de malaxage, la partie résiduelle (B") de la charge inorganique (B), ou la partie résiduelle (B") de la charge inorganique (B) et la partie résiduelle (C") de l'agent de couplage au silane (C) étant ajoutées et malaxées.

3. Procédé de production d'une composition de caoutchouc selon la revendication 1 ou 2, un composé d'acide organique (E) étant ajouté dans ou après la seconde étape de malaxage.

4. Procédé de production d'une composition de caoutchouc selon l'une quelconque des revendications 1 à 3, les multiples étapes de malaxage comprennent deux étapes de la première étape (X) et de la dernière étape (Z), dans la première étape (X), une partie (A') du constituant de caoutchouc (A), tout ou une partie de la charge inorganique (B), tout ou une partie de l'agent de couplage au silane (C), et tout ou une partie de l'accélérateur de vulcanisation (D) étant ajoutés et malaxés, et dans la dernière étape (Z), la partie résiduelle (A") du constituant de caoutchouc (A) et un agent de vulcanisation étant ajoutés et malaxés.

5. Procédé de production d'une composition de caoutchouc selon l'une quelconque des revendications 1 à 4, dans lequel, dans la première étape de malaxage, le nombre de molécules X du composé d'acide organique (E) dans la composition de caoutchouc se trouve dans la relation représentée par la formule suivante [A] par rapport au nombre des molécules Y de l'accélérateur de vulcanisation (D) à l'intérieur:

$$0 \leq X < 1{,}5 \; x \quad Y \qquad [A].$$

6. Procédé de production d'une composition de caoutchouc fournie par le malaxage d'un constituant de caoutchouc (A) comprenant au moins l'un sélectionné parmi les caoutchoucs d'origine naturelle et les caoutchoucs à base de diène synthétique, une charge contenant une charge inorganique (B), un agent de couplage au silane (C), et au moins un accélérateur de vulcanisation (D) sélectionné parmi les guanidines, les sulfénamides, les thiazoles, les thiurames, les dithiocarbamates, les thiourées, et les xanthates, la composition de caoutchouc étant malaxée en trois étapes ou plus comprenant la première étape (X) et la dernière étape (Z) et, dans la première étape (X), une partie (A') du constituant de caoutchouc (A), tout ou une partie de la charge inorganique (B), et tout ou une partie de l'agent de couplage au silane (C) sont ajoutés et malaxés, dans une étape (Y) dans ou après la seconde étape mais avant la dernière étape (Z) de malaxage, tout ou une partie de l'accélérateur de vulcanisation (D) est ajouté(e) et malaxée(e), dans ou après la seconde étape de malaxage, la partie résiduelle (A") du constituant de caoutchouc (A) est ajoutée et malaxée, et dans la dernière étape (Z), un agent de vulcanisation est ajouté et malaxé.

7. Procédé de production d'une composition de caoutchouc selon la revendication 6, dans ou après la seconde étape de malaxage, la partie résiduelle (B") de la charge inorganique (B), ou la partie résiduelle (B") de la charge inorganique (B) et la partie résiduelle (C") de l'agent de couplage au silane (C) étant ajoutées et malaxées.

**8.** Procédé de production d'une composition de caoutchouc selon la revendication 6 ou 7, un composé d'acide organique (E) étant ajouté dans ou après la seconde étape de malaxage.

**9.** Procédé de production d'une composition de caoutchouc selon l'une quelconque des revendications 1 à 8, la température maximale de la composition de caoutchouc dans la première étape (X) étant de 120 à 190°C.

**10.** Procédé de production d'une composition de caoutchouc selon l'une quelconque des revendications 1 à 9, la partie (A') du constituant de caoutchouc (A) étant au moins l'un sélectionné parmi les caoutchoucs à base de diène polymérisé en solution, et la partie résiduelle (A") du constituant de caoutchouc (A) étant au moins l'un sélectionné parmi les caoutchoucs d'origine naturelle et les caoutchoucs à base de diène polymérisé en émulsion.

**11.** Procédé de production d'une composition de caoutchouc selon l'une quelconque des revendications 1 à 10, l'agent de couplage au silane (C) étant un ou plusieurs composés sélectionnés dans le groupe constitué des composés représentés par les formules générales suivantes (I) et (II)
[Chem. 1]

$$(R^1O)_{3-p}(R^2)_pSi-R^3-S_a-R^3-Si(OR^1)_{3-r}(R^2)r \qquad (I)$$

[Dans la formule, les multiples $R^1$ peuvent être identiques ou différents et sont chacun un atome d'hydrogène, un groupe alkyle linéaire, cyclique, ou ramifié, ayant de 1 à 8 atomes de carbone, ou un groupe alcoxyalkyle linéaire ou ramifié ayant de 2 à 8 atomes de carbone; les multiples $R^2$ peuvent être identiques ou différents et sont chacun un groupe alkyle linéaire, cyclique, ou ramifié, ayant de 1 à 8 atomes de carbone; les multiples $R^3$ peuvent être identiques ou différents et sont chacun un groupe alcylène linéaire ou ramifié, ayant de 1 à 8 atomes de carbone. a présente la valeur de 2 à 6 comme valeur moyenne; et p et r peuvent être identiques ou différents et ont chacun la valeur de 0 à 3 comme valeur moyenne. Cependant, p et r ne sont pas d'une valeur de 3 en même temps
[Chem. 2]

$$(R^4O)_{3-s}(R^5)_sSi-R^6-S_k-R^7-S_k-R^6-Si(OR^4)_{3-t}(R^5)_t \qquad (II)$$

[Dans la formule, les multiples $R^4$ peuvent être identiques ou différents et sont chacun un atome d'hydrogène, un groupe alkyle linéaire, cyclique, ou ramifié, ayant de 1 à 8 atomes de carbone, ou un groupe alcoxyalkyle linéaire ou ramifié ayant de 2 à 8 atomes de carbone; les multiples $R^5$ peuvent être identiques ou différents et sont chacun un groupe alkyle linéaire, cyclique, ou ramifié, ayant de 1 à 8 atomes de carbone; les multiples $R^6$ peuvent être identiques ou différents et sont chacun un groupe alcylène linéaire ou ramifié, ayant de 1 à 8 atomes de carbone. $R^7$ est un groupe divalent de l'une quelconque des formules générales, $(-S-R^8-S-)$, $(-R^9-S_{m1}-R^{10}-)$, et $(-R^{11}-S_{m2}-R^{12}-S_{m3}-R^{13}-)$ ($R^8$ à $R^{13}$ sont chacun un groupe hydrocarbure divalent, un groupe aromatique divalent ou un groupe organique divalent contenant un hétéroatome autre qu'un atome de soufre et d'oxygène, ayant chacun de 1 à 20 atomes de carbone; et m1, m2, et m3 ont chacun la valeur de 1 ou plus mais inférieure à 4 comme valeur moyenne); les multiples k peuvent être identiques ou différents et ont chacun la valeur de 1 à 6 comme valeur moyenne; s et t ont chacun la valeur de 0 à 3 comme valeur moyenne. Cependant, s et t ne sont pas d'une valeur de 3 en même temps.

**12.** Procédé de production d'une composition de caoutchouc selon l'une quelconque des revendications 1 à 11, l'agent de couplage au silane (C) étant un composé représenté par la formule générale précédente (I).

**13.** Procédé de production d'une composition de caoutchouc selon l'une quelconque des revendications 1 à 12, la charge inorganique (B) étant de la silice.

**14.** Procédé de production d'une composition de caoutchouc selon l'une quelconque des revendications 1 à 13, la charge inorganique (B) comptant pour 30 % en masse ou plus dans la charge.

**15.** Procédé de production d'une composition de caoutchouc selon l'une quelconque des revendications 1 à 5 et 9 à 14, le nombre de molécules de l'accélérateur de vulcanisation (D) dans la composition de caoutchouc dans la première étape de malaxage étant de 0,1 à 1,0 multiplié par le nombre de molécules de l'agent de couplage au silane (C) à l'intérieur.

**16.** Procédé de production d'une composition de caoutchouc selon l'une quelconque des revendications 1 à 15, la guanidine étant au moins un composé sélectionné parmi la 1,3-diphénylguanidine, la 1,3-di-*o*-tolylguanidine et le 1-*o*-tolylbiguanide.

**17.** Procédé de production d'une composition de caoutchouc selon l'une quelconque des revendications 1 à 16, le xanthate étant de l'isopropyle xanthate de zinc.

**18.** Procédé de production d'une composition de caoutchouc selon l'une quelconque des revendications 1 à 17, l'acide stéarique comptant pour 50 % en mole ou plus dans le composé d'acide organique (E).

**19.** Composition de caoutchouc produite selon le procédé de production d'une composition de caoutchouc selon l'une quelconque des revendications 1 à 18.

**20.** Pneumatique utilisant la composition de caoutchouc selon la revendication 19, comme au moins un élément des parties de roulement, des parties de roulement de base, des parties de flanc, des gommes intérieures et des parties en caoutchouc de renforcement latéral.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002521515 T
- JP 2002521516 T
- JP 2003530443 T
- JP 2003523472 T
- WO 2008123306 A
- JP 2007154130 A
- JP 2006167919 A